# EUROPÄISCHE PATENTANMELDUNG

(11) **EP 1 647 307 A1**
(43) Veröffentlichungstag der Anmeldung: **19.04.2006**
(21) Anmeldenummer: 04024446.9
(22) Anmeldetag: 14.10.2004
(51) Int. Cl.: A61N 5/06, A61C 19/06

(54) **Zahnschiene**

(71) Anmelder: Hürth, Martin, Dr., 53343 Wachtberg-Pech (DE)
(72) Erfinder: Hürth, Martin, Dr., 53343 Wachtberg-Pech (DE)
(74) Vertreter: Bauer, Dirk

(57) **Zusammenfassung**

Offenbart ist eine Zahnschiene (1) zur Applikation am menschlichen oder tierischen Kiefer. Vorgeschlagen wird, die Zahnschiene (1) mit Lichtemittem zu versehen, mittels derer Licht zu therapeutischen Zwecken in die Mundhöhle emittierbar ist.

## Beschreibung

Die Erfindung betrifft eine Zahnschiene zur Applikation am menschlichen oder tierischen Kiefer. Derartige Zahnschienen sind grundsätzlich bekannt und kommen beispielsweise in der zahnärztlichen Therapie von Schlafapnoe, zur Vermeidung nächtlichen "Knirschens" oder auch zum Andrücken von Abformmassen zum Einsatz. Je nach Anwendungsfall sind die bekannten Zahnschienen starr oder flexibel, bestehen aus Metall oder aus Kunststoff. Die Form der Zahnschiene kann an ein konkretes Gebiss exakt oder durch Verwendung von Standardgrößen mit entsprechenden Toleranzen ungefähr angepasst sein.

Bekannt ist es auch, Softlaser mit einer Leistung von einigen Milliwatt im Rahmen der Biostimulationstherapie beispielsweise zur Beschleunigung von Heilungsvorgängen zu verwenden. Unter Biostimulation versteht man die Beeinflussung gewebephysiologischer Vorgänge durch äußere Einwirkung eines Stimulus; beispielsweise durch Wärme, Ultraschall, Reizströme oder hier: durch Licht. Bekannt sind diese Stimuli aus der physikalischen Therapie in Form der Thermo-, Elektro- oder Mechanotherapie.

Laserlicht ist durch erzwungene Emission von Strahlung gegenüber dem natürlichen verstärktes (Laser: Light amplification by stimulated emission of radiation) Licht. Laserlicht ist einfarbig, weist also im Wesentlichen nur eine Wellenlänge (Monochromasie) und eine einheitliche Phasenlage auf (Kohärenz) und ein Strahlenbündel divergiert im Vergleich zum natürlichen Licht praktisch nicht (Parallelität). Im Gegensatz zur chirurgischen Anwendung schneidender Laser, die das Gewebe koagulieren oder vaperiosieren, handelt es sich bei der Biostimulation mittels Softlasern um eine athermische Therapieform. Es treten also keine unmittelbahren Hautveränderungen oder Hautsensationen während der Behandlung auf.

Die Biostimulationstherapie wird eingesetzt zur Wundheilung (Granulation, Epithelisation, Trophik), Entzündungshemmung und Analgesie unter anderem auch in der Mundhöhle. Hierzu wird ein stiftförmiger Lichtemitter vom behandelnden Therapeuten an den zur Behandlung vorgesehenen Ort geführt, und dort bei eingeschaltetem Laser manuell in der Regel einige Sekunden gehalten. Der Lichtemitter kann auch zur flächigen Behandlung beispielsweise des Zahnfleischs bei eingeschaltetem Laser manuell über die Fläche geführt werden.

Erfahrungen der traditionellen Medizin, der Homöopathie, der Neuraltherapie und die neueren Erkenntnisse der Forschungen im Rahmen der Störherddiagnostik und -therapie zeigen, dass Zahnerkrankungen einen den tierischen wie den menschlichen Organismus stark belastenden und letztlich krankheitsinduzierenden Einfluss haben.

Es war festzustellen, dass akute oder chronischen Zahnerkrankungen in häufigen Fällen keine lokalen Symptome wie Zahnschmerz zeigen, sondern Projektionen in andere Körperareale mit beispielsweise Ischiasschmerz, HWS-Syndrome, Magenbeschwerden stattfinden. Diese "Stellvertreterschmerzen" werden oft nicht als zahnabhängiges Phänomen behandelt, sondern als lokales Schmerzereignis und stellen sich oft als einer Therapie kaum zugänglich dar.

Durch die Applikation von Laserlicht in bestimmten Frequenzen auf das Zahnfleischareal des betroffenen Zahnes mit den dort verlaufenden nervalen Strukturen lassen sich solche Projektionsschmerzen zeitweise oder dauerhaft aufheben - je nach Art der Zahnerkrankung. Da Schmerz ein körpereigenes Alarmsignal darstellt, muss der regulierende Einfluss des Laserlichts im Sinne einer Phototherapie auf den Zahnprozess selbst als Auslöser des Schmerzrückgangs gesehen werden. Oft zeigen sich röntgenologisch bei lasertechnisch diagnostizierten Zahnproblemen keine Veränderungen. Wird der Zahn dennoch eröffnet oder entfernt, zeigen sich zum Teil desaströse Veränderungen beispielsweise des Wurzelbereichs, die sich dem Nachweis in bildgebenden Verfahren entzogen.

Neben der Wellenlänge des applizierten Lichts hat besonders die Frequenz des Laserpulses einen wesentlichen regulierenden Einfluss auf den menschlichen wie tierischen Organismus. Die Applikation von Laserlicht auf die Zahnschleimhäute hat einen regulierenden, abheilungsfördernden Einfluss auf Zahnprozesse und unterbindet insbesondere deren systemische Projektion in zugeordnete Areale des Körpers.

Dies ist maßgeblich der transcutanen Wirkung des Laserlichts auf die hier zum Teil sehr oberflächlich verlaufenden zahnversorgenden Nervenbahnen des Zahnfleischs und der Mundschleimhaut zuzuordnen. Deren pathologisch veränderte "Funktionsfrequenz" wird durch Überlagerung von physiologisch wirkenden, "gesunden" Laserfrequenzen rerhythmisiert, analog zur elektrischen Rhythmusregulierung der Kardioversion am Herzen.

Mit Hilfe der Biostimulation mittels Softlaser kann so Krankheit gestoppt und sogar geheilt werden. Die Störwirkung, die den Organismus in seiner Regulationstätigkeit behindert, wird aufgehoben und der Organismus kann seine Eigenregulation wieder durchführen.

Die bekannte Methode zur Anwendung der Biostimulationstherapie mittels Softlaser in der Mundhöhle weist verschiedene Nachteile auf: Sie erfordert sowohl eine absolut ruhige Haltung des Patienten als auch eine hohe Konzentration und Körperbeherrschung des Therapeuten für die gesamte Dauer der Behandlung. Für die Selbstbehandlung eines nicht geübten Laien ist diese Methode ungeeignet.

### Aufgabe

Der Erfindung liegt die Aufgabe zugrunde, die Anwendung der Biostimulationstherapie mittels Softlaser in der Mundhöhle derart zu erleichtern, dass sie auch für die Selbstbehandlung durch einen medizinischen Laien ausführbar wird.

### Lösung

Ausgehend von den bekannten Zahnschienen wird nach der Erfindung vorgeschlagen, dass die Zahnschiene Lichtemitter aufweist, mittels derer Licht zu therapeutischen Zwecken in die Mundhöhle emittierbar ist. Das richtige Platzieren einer Zahnschiene bereitet selbst dem medizinischen Laien keinerlei Probleme. Die Selbstbehandlung mittels der erfindungsgemäßen Zahnschiene hindert den Patienten kaum in seiner Bewegungsfreiheit. So wird eine regelmäßige, im Idealfall täglich kurzzeitige Therapie parallel zu Tätigkeiten im Haushalt oder während der Arbeitszeit in vielen Fällen möglich.

Vorzugsweise ist mittels der Lichtemitter der erfindungsgemäßen Zahnschiene Laserlicht emittierbar. Die erfindungsgemäße Zahnschiene ist dann für die Anwendung einer Therapie mittels Laserlicht geeignet. Alternativ kann auch nicht-monochromatisches Licht mittels der Lichtemitter emittierbar sein, so dass mittels der erfindungsgemäßen Zahnschiene beispielsweise eine Farblichttherapie in der Mundhöhle ausführbar ist.

Besonders bevorzugt ist mittels der Lichtemitter der erfindungsgemäßen Zahnschiene Softlaserlicht emittierbar. Die erfindungsgemäße Zahnschiene eignet sich dann für die Anwendung einer Biostimulationstherapie. Das Softlaserlicht weist insbesondere eine Leistung von weniger als ein Milliwatt auf, so dass selbst bei inadäquater Anwendung keine Augenschäden auftreten. Die erfindungsgemäße Zahnschiene ist dann besonders für die Selbstbehandlung durch einen medizinischen Laien geeignet. Für die Anwendung durch medizinisches Fachpersonal kann die Leistung der Lichtemitter deutlich höher liegen.

In einer besonders vorteilhaften Ausführung der erfindungsgemäßen Zahnschiene ist mindestens eine Zahnreihe zumindest teilweise U-förmig umfassbar. Die erfindungsgemäße Zahnschiene ist dann besonders leicht anwendbar, eine fehlerhafte Positionierung ist praktisch auszuschließen. Alternativ kann die erfindungsgemäße Zahnschiene auch nur mesial, also auf der dem Gaumen zugewandten Seite der Zähne oder nur distal, also auf der den Wangen zugewandten Seite der Zähne ausgebildet sein. Die erfindungsgemäße Zahnschiene gestattet dann auch während der Behandlung ein fast vollständiges Schließen des Kiefers und behindert den Patienten während der Behandlung nur noch geringfügig.

Das Licht ist mittels der erfindungsgemäßen Zahnschiene vorzugsweise auf das Zahnfleisch emittierbar, so dass dieses mit dem Licht behandelbar ist. Alternativ oder zusätzlich kann das Licht auch auf Zähne, Gaumen, Wangenknochen, Nasennebenhöhlen, Polypen, Mandeln gerichtet sein.

Besonders bevorzugt ist eine Ausführungsform der erfindungsgemäßen Zahnschiene mit Lichtleitern, mittels derer das Licht von einem Lichterzeuger zu den Lichtemittern leitbar ist. Lichtleiter stellen ein Massenprodukt dar, so dass die erfindungsgemäße Zahnschiene so besonders kostengünstig herzustellen ist. Außerdem können die Enden der Lichtleiter bereits ohne weitere Anbauelemente die Funktion der Lichtemitter übernehmen. Alternativ können die Lichtemitter in Form von Dioden, insbesondere auch in Form von Laserdioden ausgebildet sein, die in die erfindungsgemäße Zahnschiene eingebaut sind.

Die Zahnschiene kann vorzugsweise über die Lichtleiter in einem 50 bis 70 cm langen Kabel mit einem außerhalb der Mundhöhle angeordneten Lichterzeuger verbindbar sein. So können insbesondere Standardbauteile zur Lichterzeugung zum Einsatz kommen, die wiederum eine kostengünstige Herstellung begünstigen. Alternativ erlaubt die fortschreitende Miniaturisierung von Bauelementen und die oben aufgeführte Verwendung von Dioden eine Ausführungsform der erfindungsgemäßen Zahnschiene mit integrierter Licht- und Spannungsversorgung, so dass keine Kabel aus der Mundhöhle geführt werden müssen.

In einer erfindungsgemäßen Zahnschiene mit Lichtleitern verlaufen diese bevorzugt eingebettet in die Zahnschiene. So wird einerseits ein allzu technischer Gesamteindruck der erfindungsgemäßen Zahnschiene vermieden, andererseits sind die empfindlichen Lichtleiter vor Beschädigung von Außen weitgehend geschützt. Alternativ können die Lichtleiter auf den Zähnen abwandten Seiten der Zahnschiene verlaufen. Durch diese Anordnung wird wiederum die Herstellung der erfindungsgemäßen Zahnschiene vereinfacht.
Alternativ können Lichtleiter auch in einzelnen Fasern anstelle einer gezielten fokussierten Lichtemission ein diffuses Licht in die Mundhöhle emittieren.

### Ausführungsbeispiel

Die Erfindung wird nachfolgend anhand von zwei skizzenhaft dargestellten Ausführungsbeispielen erläutert. Es zeigen
- Fig. 1a: einen Horizontalschnitt und
- Fig. 1b: einen Vertikalschnitt durch eine erste erfindungsgemäße Zahnschiene,
- Fig. 2a: einen Horizontalschnitt und
- Fig. 2b: einen Vertikalschnitt durch eine zweite erfindungsgemäße Zahnschiene.

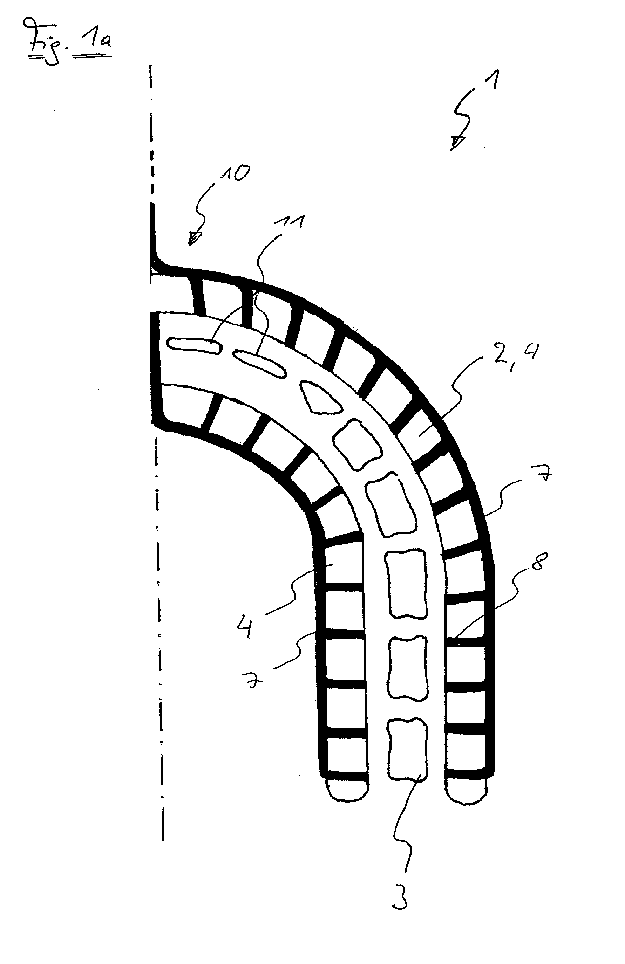

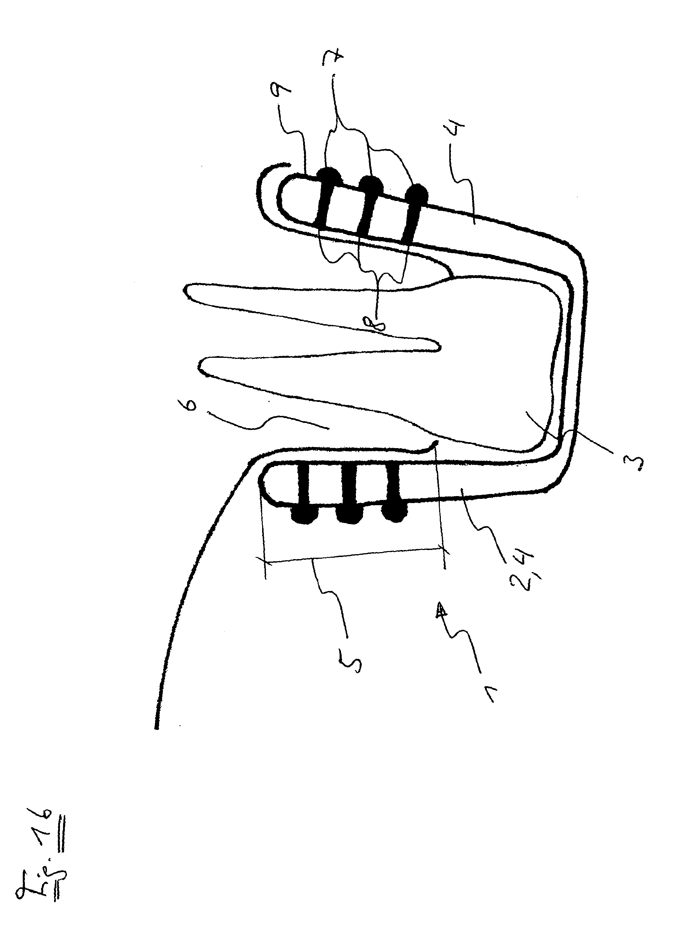

Die in Figur 1a und 1b gezeigte erste erfindungsgemäße Zahnschiene weist einen U-förmigen Schienenkörper 2 auf, der im angelegten Zustand die zeichnerisch angedeutete Zahnreihe 3 umgreift. (Dargestellt ist hier wie auch in den folgenden Figuren jeweils nur eine Seite der erfindungsgemäßen Zahnschiene 1. Die jeweils nicht dargestellte Seite ist spiegelbildlich identisch ausgebildet.)

Der Schienenkörper 2 ist aus Co-Polyester durch thermische Formpressung gefertigt nach einem nicht dargestellten, standardisierten, individuell angepassten Modell gefertigt. Die Schenkel 4 des Schienenkörpers liegen in einer Breite 5 von etwa 2 cm mesial und distal auf Höhe des Zahnfleischs 6.

Die Zahnschiene 1 weist eine Vielzahl von Lichtleitern 7 aus Glasfaser auf, die Softlaserlicht mit einer Leistung unterhalb von 1 mW von einem nicht dargestellten Lichterzeuger, einem handelsüblichen Lasersystem, bis zu den als Lichtemitter fungierenden Enden 8 der Lichtleiter 7 leiten. Aus den zahnfleischnah liegenden Enden 8 emittieren die Lichtleiter 7 Softlaserlicht unmittelbar auf das angrenzende Areal.

Ausgehend von den Enden 8 verlaufen die Lichtleiter 7 von innen nach außen durch den Schienenkörper 2 hindurch und werden auf der Außenseite 9 des Schienenkörpers 2 zum vorderen Ende 10 der Zahnschiene 1 geführt. Im Bereich der Schneidezähne 11 führen die Lichtleiter 7 unterhalb der nicht dargestellten Zahnkante in ein nicht dargestelltes, etwa 60 cm langes Kabel, das die Zahnschiene 1 mit dem Lichterzeuger verbindet.

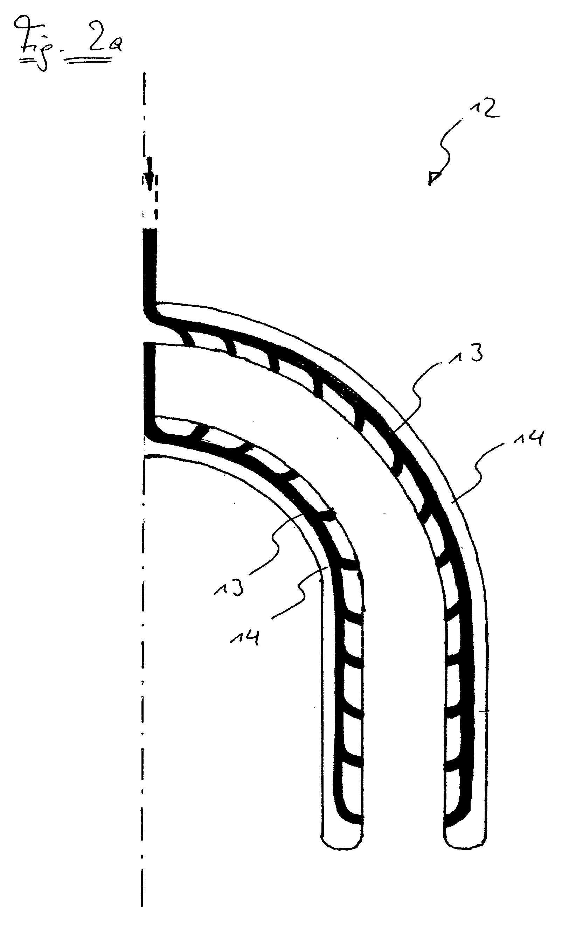

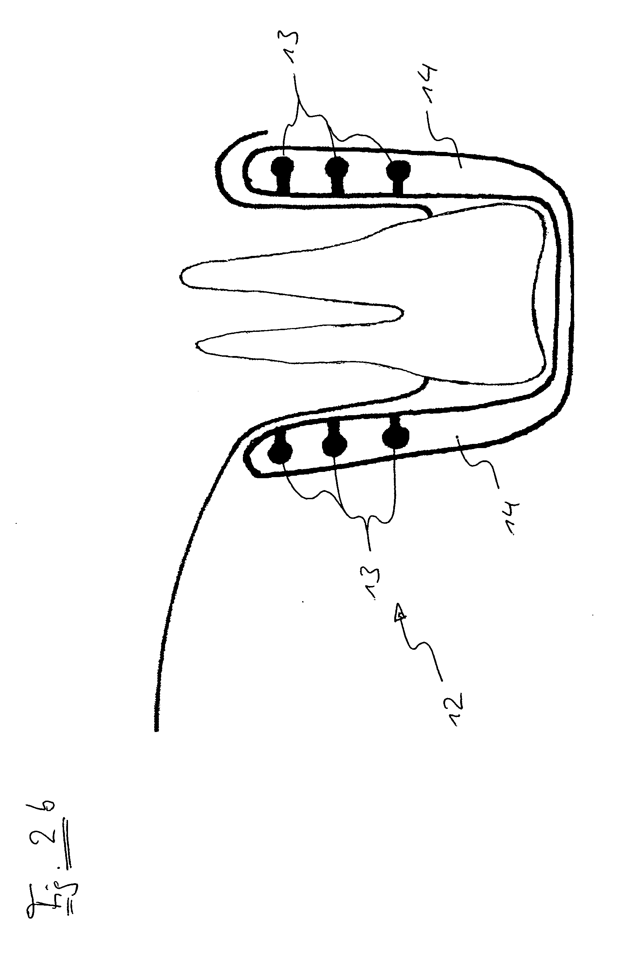

Die in Figur 2a und 2b dargestellte zweite erfindungsgemäße Zahnschiene 12 unterscheidet sich von der ersten Zahnschiene 1 gemäß den Figuren 1a und 1b lediglich insofern, als die Lichtleiter 13 in den Schienenkörper 14 eingegossen sind und in dessen Innern verlaufen.

In den Figuren sind
- 1: Zahnschiene
- 2: Schienenkörper
- 3: Zahnreihe
- 4: Schenkel
- 5: Breite
- 6: Zahnfleisch
- 7: Lichtleiter
- 8: Ende
- 9: Außenseite
- 10: Ende
- 11: Schneidezahn
- 12: Zahnschiene
- 13: Lichtleiter
- 14: Schienenkörper

## Patentansprüche

1. Zahnschiene (1, 12) zur Applikation am menschlichen oder tierischen Kiefer, **gekennzeichnet durch** Lichtemitter, mittels derer Licht zu therapeutischen Zwecken in die Mundhöhle emittierbar ist.

2. Zahnschiene (1, 12) nach dem vorgenannten Anspruch, **dadurch gekennzeichnet, dass** mittels der Lichtemitter Laserlicht emittierbar ist.

3. Zahnschiene (1, 12) nach dem vorgenannten Anspruch, **dadurch gekennzeichnet, dass** mittels der Lichtemitter Softlaserlicht emittierbar ist.

4. Zahnschiene (1, 12) nach dem vorgenannten Anspruch, **dadurch gekennzeichnet, dass** das Softlaserlicht eine Leistung von weniger als ein Milliwatt aufweist.

5. Zahnschiene (1, 12) nach einem der vorgenannten Ansprüche, **dadurch gekennzeichnet, dass** mittels der Zahnschiene (1) mindestens eine Zahnreihe (3) zumindest teilweise U-förmig umfassbar ist.

6. Zahnschiene (1, 12) nach einem der vorgenannten Ansprüche, **dadurch gekennzeichnet, dass** das Licht auf das Zahnfleisch (6) emittierbar ist.

7. Zahnschiene (1, 12) nach einem der vorgenannten Ansprüche, **gekennzeichnet durch** Lichtleiter (7, 13), mittels derer das Licht von einem Lichterzeuger zu den Lichtemittem leitbar ist.

8. Zahnschiene (1, 12) nach dem vorgenannten Anspruch, **dadurch gekennzeichnet, dass** die Zahnschiene (1) über die Lichtleiter (7, 13) in einem 50 bis 70 cm langen Kabel mit einem außerhalb der Mundhöhle angeordneten Lichterzeuger verbindbar ist.

9. Zahnschiene (12) nach einem der Ansprüche 7 oder 8, **dadurch gekennzeichnet, dass** die Lichtleiter (13) in die Zahnschiene (12) eingebettet verlaufen.

10. Zahnschiene (1) nach einem der Ansprüche 7 oder 8, **dadurch gekennzeichnet, dass** die Lichtleiter (7) auf den Zähnen abwandten Seiten der Zahnschiene (1) verlaufen.
